# EUROPEAN PATENT APPLICATION

(11) **EP 4 815 096 A1**
(43) Date of publication of application: **30.09.2026**
(21) Application number: 24894120.5
(22) Date of filing: 18.11.2024
(51) Int. Cl.: H01M 10/36, H01M 4/66

(54) **AQUEOUS BATTERY**

(30) Priority: 22.11.2023 JP 2023198434
(71) Applicant: TOYOTA JIDOSHA KABUSHIKI KAISHA, Toyota-shi Aichi 471-8571 (JP)
(72) Inventor: Suyama, Hiroshi, Toyota-shi, Aichi 471-8571 (JP)
(74) Representative: D Young & Co LLP
(86) International application number: PCT/JP2024/040859
(87) International publication number: WO 2025/110129

(57) **Abstract**

Disclosed is a technology where, when a current collector containing Al is used in an aqueous battery, elution of Al from the current collector into an aqueous electrolyte solution can be suppressed. The aqueous battery of the present disclosure includes a positive electrode, an aqueous electrolyte solution, and a negative electrode. One or both of the positive electrode and the negative electrode has/have a current collector containing Al. The current collector is in contact with the aqueous electrolyte solution. The aqueous electrolyte solution contains water, potassium polyphosphate dissolved in the water, and at least one of potassium hydrogen phosphate, phosphoric acid, polyphosphoric acid and carboxylic acid dissolved in the water.

## Description

### FIELD

The present application relates to an aqueous battery.

### BACKGROUND

PTL 1 discloses an aqueous electrolyte solution including water and potassium pyrophosphate dissolved at a concentration of 2 mol or more per 1 kg of the water. When an aqueous battery is formed with the aqueous electrolyte solution disclosed in PTL 1, decomposition of the aqueous electrolyte solution on the surface of an electrode is easily suppressed even when the aqueous battery is charged and discharged, because of wide potential window on the reduction side of the aqueous electrolyte solution. In addition, in PTL 1, when the aqueous electrolyte solution is evaluated, a Ti foil and an Au foil are used as electrode current collectors.

### [CITATION LIST]

### [PATENT LITERATURE]

[PTL 1] Japanese Unexamined Patent Publication No. 2019-220294

### SUMMARY

### [TECHNICAL PROBLEM]

Conventional aqueous batteries have room for improvement in corrosion countermeasures of current collectors. For example, when a current collector containing Al is used in an aqueous battery, Al is easily eluted from the current collector into an aqueous electrolyte solution when the battery is charged and discharged. When a current collector containing Al is used in an aqueous battery, there is a need for a new technology for inhibiting Al from being eluted from the current collector into an aqueous electrolyte solution.

### [SOLUTION TO PROBLEM]

The present application discloses, as the aforementioned solution to problem, a plurality of aspects below.
<Aspect 1> An aqueous battery including a positive electrode, an aqueous electrolyte solution and a negative electrode, wherein
   one or both of the positive electrode and the negative electrode has/have a current collector containing Al,
   the current collector is in contact with the aqueous electrolyte solution, and
   the aqueous electrolyte solution contains
      water,
      potassium polyphosphate dissolved in the water, and
      at least one of potassium hydrogen phosphate, phosphoric acid, polyphosphoric acid and carboxylic acid dissolved in the water.
<Aspect 2> The aqueous battery according to aspect 1, wherein
   the aqueous electrolyte solution contains the potassium polyphosphate dissolved at a concentration of 3 mol or more per 1 kg of the water.
<Aspect 3> The aqueous battery according to aspect 1, wherein
   the aqueous electrolyte solution contains the potassium polyphosphate dissolved at a concentration of 3 mol or more and 6 mol or less per 1 kg of the water.
<Aspect 4> The aqueous battery according to aspect 1, wherein
   the aqueous electrolyte solution contains the potassium polyphosphate dissolved at a concentration of 4 mol or more and 5 mol or less per 1 kg of the water.
<Aspect 5> The aqueous battery according to any one of aspects 1 to 4, wherein
   the aqueous electrolyte solution contains potassium dihydrogen phosphate dissolved in the water, and
   a concentration of K in the aqueous electrolyte solution is 11.16 mol/L or more and 14.94 mol/L or less.
<Aspect 6> The aqueous battery according to any one of aspects 1 to 5, wherein
   the aqueous electrolyte solution has no freezing point at -40°C or higher.
<Aspect 7> The aqueous battery according to any one of aspects 1 to 6, wherein the aqueous electrolyte solution does not involve salt precipitation when cooled from 0°C to -40°C.
<Aspect 8> The aqueous battery according to any one of aspects 1 to 7, wherein
   the aqueous electrolyte solution has a viscosity of 20 mPa·s or more and 400 mPa·s or less at 20°C.
<Aspect 9> The aqueous battery according to any one of aspects 1 to 8, wherein
   a pH of the aqueous electrolyte solution is 3 or more and 12 or less.
<Aspect 10> The aqueous battery according to any one of aspects 1 to 9, wherein
   at least the positive electrode has the current collector.
<Aspect 11> The aqueous battery according to any one of aspects 1 to 10, having a bipolar structure, wherein
   a positive electrode active material layer is formed on one side of the current collector and a negative electrode active material layer is formed on the other side of the current collector.

### [EFFECTS]

According to the aqueous battery of the present disclosure, it is easy to suppress elution of Al from a current collector to an aqueous electrolyte solution.

### BRIEF DESCRIPTION OF DRAWINGS

FIG. 1 schematically shows an example of a structure of an aqueous battery.
FIG. 2 schematically shows an example of a structure of an aqueous battery.
FIG. 3 shows a cyclic voltammogram in Comparative Example 5.
FIG. 4 shows a cyclic voltammogram in Example 17.
FIG. 5 shows a cyclic voltammogram in Example 47.

### DESCRIPTION OF EMBODIMENTS

One embodiment of the aqueous battery of the present disclosure will be described below with reference to the drawings, but the technology of the present disclosure is not limited to the following embodiments.

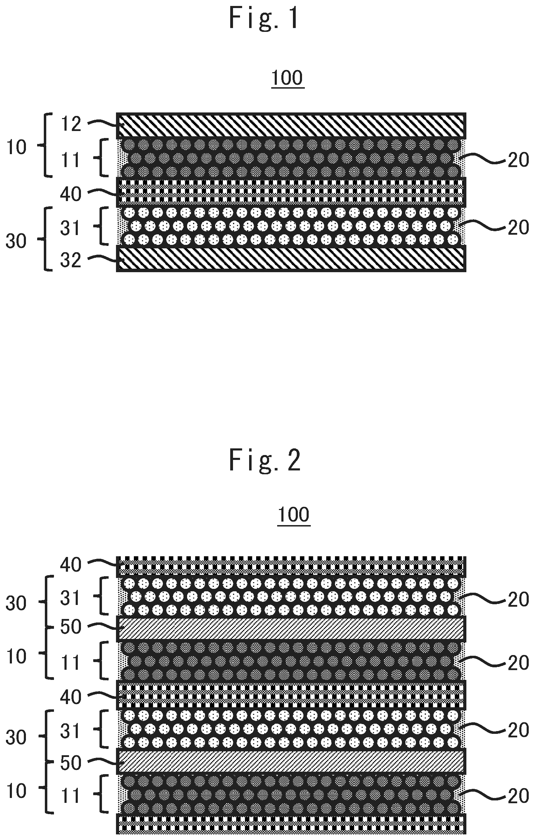

As shown in FIG. 1, an aqueous battery 100 according to one embodiment includes a positive electrode 10, an aqueous electrolyte solution 20, and a negative electrode 30. One or both of the positive electrode 10 and the negative electrode 30 has/have a current collector containing Al. The current collector is in contact with the aqueous electrolyte solution 20. The aqueous electrolyte solution 20 includes water, potassium polyphosphate dissolved in the water, and at least one of potassium hydrogen phosphate, phosphoric acid, polyphosphoric acid and carboxylic acid dissolved in the water.

### 1. Positive Electrode

It is possible to use, as the positive electrode 10, any known positive electrode for an aqueous battery. As shown in FIG. 1, the positive electrode 10 may include a positive electrode active material layer 11 and a positive electrode current collector 12.

### 1.1 Positive Electrode Active Material Layer

The positive electrode active material layer 11 contains a positive electrode active material. The positive electrode active material layer 11 is impregnated with the aqueous electrolyte solution 20. The positive electrode active material layer 11 may contain, in addition to the positive electrode active material, a conductive aid, a binder, and/or the like. The positive electrode active material layer 11 may also contain various other additives. The content of each component in the positive electrode active material layer 11 may be appropriately determined according to the objective battery performance. For example, the content of the positive electrode active material may be 40% by mass or more, 50% by mass or more, 60% by mass or more, or 70% by mass or more, and may be 100% by mass or less, or 90% by mass or less, based on 100% by mass of the entire positive electrode active material layer 11 (total solid content). The shape of the positive electrode active material layer 11 is not particularly limited, and the positive electrode active material layer may be, for example, a sheet-shaped positive electrode active material layer having an approximately flat surface. The thickness of the positive electrode active material layer 11 is not particularly limited, and may be, for example, 0.1 µm or more, 1 µm or more, or 10 µm or more, and may be 2 mm or less, 1 mm or less, or 500 µm or less.

Any substance capable of functioning as the positive electrode active material of the aqueous battery (for example, an aqueous battery with an aqueous electrolyte solution containing potassium ions) can be used as the positive electrode active material. The positive electrode active material has a higher charge-discharge potential than that of the below-mentioned negative electrode active material, and can be appropriately selected in consideration of the potential window and the like of the below-mentioned aqueous electrolyte solution 20. In the present embodiment, various ions derived from an aqueous electrolyte solution can serve as charge compensation ions. Specifically, charge compensation ions inserted and deinserted by the positive electrode active material may be, for example, one, or two or more of potassium ions, protons, electrolyte-derived anions, and hydroxide ions. The positive electrode active material may be any of various hydroxides or oxides, such as Ni(OH)2 (e.g., Japanese Unexamined Patent Publication No. 2023-154313) being a layered nickel hydroxide compound, at least one of AₓK_{y}Ni_{1-z}M_{z}O_{2±δ}·nH₂O (wherein A is at least one of Li, Na, Rb, Cs, Mg, Ca, Sr, Ba and Sc, M is at least one of transition metal elements, 2A group elements, 3A group elements, 2B group elements and 3B group elements, relationships of 0 ≤ x < 0.5, 0 < y ≤ 0.5, 0 ≤ z ≤ 0.5, 0 < n ≤ 2, and (α·x) + y ≤ 0.5 are satisfied, α is a valence of the cation of A, e.g., Japanese Unexamined Patent Publication No. 2023-132287), a manganese spinel (for example, LiMn₂O₄), and a nickel-manganese-cobalt-containing composite oxide (NMC). The positive electrode active material may also be an alkali metal element-containing oxide, polyanions, or the like. More specifically, the positive electrode active material may also be a composite oxide of an alkali metal element and transition metal. The composite oxide may be at least one selected from alkali metal cobalt composite oxide (AmCoO2, etc., "Am" is an alkali metal element, and the same applies to the following.), alkali metal nickel composite oxide (AmNiO₂, etc.), alkali metal nickel titanium composite oxide (AmNi_{1/2}Ti_{1/2}O₂, etc.), alkali metal nickel manganese composite oxide (AmNi_{1/2}Mn_{1/2}O₂, AmNi_{1/3}Mn_{2/3}O₂, etc.), alkali metal manganese composite oxide (AmMnO₂, AmMn₂O₄, etc.), alkali metal iron manganese composite oxide (Am_{2/3}Fe_{1/3}Mn_{2/3}O₂, etc.), alkali metal nickel cobalt manganese composite oxide (AmNi_{1/3}Co_{1/3}Mn_{1/3}O₂, etc.), alkali metal iron composite oxide (AmFeO₂, etc.), alkali metal chromium composite oxide (AmCrO₂, etc.), an alkali metal iron phosphate compound (AmFePO₄, etc.), an alkali metal manganese phosphate compound (AmMnPO₄, etc.), and an alkali metal cobalt phosphate compound (AmCoPO₄). Alternatively, the positive electrode active material may be an active material such as Prussian blue. Alternatively, the positive electrode active material may be at least one selected from alkali metal titanium composite oxide, Ti02, and sulfur (S) which show a noble charge-discharge potential compared to the below-mentioned negative electrode active material. The positive electrode active material may be one which inserts and deinserts charge compensation ions by intercalation, or which inserts and deinserts charge compensation ions by a conversion reaction or an alloying reaction. Only one positive electrode active material may be used alone, or two or more thereof may be used in combination.

The shape of the positive electrode active material may be any shape capable of functioning as the positive electrode active material of the battery. For example, the positive electrode active material may be in the form of particles. The positive electrode active material may be a solid material, a hollow material, a material with voids, or a porous material. The positive electrode active material may be a primary particle, or a secondary particle obtained by agglomeration of a plurality of primary particles. The mean particle diameter D50 of the positive electrode active material may be, for example, 1 nm or more, 5 nm or more, or 10 nm or more, and may be 500 µm or less, 100 µm or less, 50 µm or less, or 30 µm or less. The mean particle diameter D50 in the present application is the particle diameter (median diameter) at 50% of the integrated value in the volume-based particle diameter distribution determined by the laser diffraction and scattering method.

Examples of the conductive aid which can be contained in the positive electrode active material layer 11 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 1.2 Positive Electrode Current Collector

As shown in FIG. 1, the positive electrode 10 may include a positive electrode current collector 12 in contact with the positive electrode active material layer 11. The positive electrode current collector 12 is in contact with an aqueous electrolyte solution 20. It is possible to use, as the positive electrode current collector 12, any material capable of functioning as the positive electrode current collector of the aqueous battery. When the below-mentioned negative electrode current collector 32 contains Al, the positive electrode current collector 12 may contain Al or may not contain Al. When the below-mentioned negative electrode current collector 32 does not contain Al, the positive electrode current collector 12 contains Al. As mentioned below, elution of Al from the current collector to the aqueous electrolyte solution particularly easily occurs on the positive electrode side which becomes the oxidation potential. According to the aqueous battery 100 of the present disclosure, even if the positive electrode current collector 12 contains Al, it is possible to suppress elution of Al from the positive electrode current collector 12 into the aqueous electrolyte solution 20. Namely, in the aqueous battery 100, at least the positive electrode 10 may have a current collector containing Al.

When the positive electrode current collector 12 contains Al, the entire positive electrode current collector 12 may be composed of Al, or at least a portion of the surface thereof may be composed of Al. For example, the positive electrode current collector 12 may be made of an Al foil, or the surface of a metal foil or some base material may be coated with Al. The positive electrode current collector 12 may be one in which Al is present on at least a portion of the surface in contact with the aqueous electrolyte solution 20, or one in which Al is present over the entire surface in contact with the aqueous electrolyte solution 20.

The positive electrode current collector 12 may be in the form of foil, plate, mesh, perforated metal, and foam. The positive electrode current collector 12 may be formed of a metal foil or a metal mesh. In particular, the metal foil is excellent in ease of handling or the like. The positive electrode current collector 12 may be composed of a plurality of foils. Examples of the metal material constituting the positive electrode current collector 12 include those containing at least one element selected from the group consisting of Cu, Ni, Al, V, Au, Pt, Mg, Fe, Ti, Pb, Co, Cr, Zn, Ge, In, Sn, and Zr. In particular, the positive electrode current collector 12 preferably contains Al, as mentioned above. The positive electrode current collector 12 may be one in which the above metal is plated or vapor-deposited on a metal foil or a base material. When the positive electrode current collector 12 is composed of a plurality of metal foils, the positive electrode current collector may have some layer between the plurality of metal foils. The thickness of the positive electrode current collector 12 is not particularly limited. For example, the thickness may be 0.1 µm or more, or 1 µm or more, and may be 1 mm or less, or 100 µm or less.

### 2. Aqueous Electrolyte Solution

The aqueous electrolyte solution 20 includes water, potassium polyphosphate dissolved in the water, and at least one of potassium hydrogen phosphate, phosphoric acid, polyphosphoric acid and carboxylic acid dissolved in the water. The aqueous electrolyte solution 20 may be in contact with the above-mentioned positive electrode current collector 12, may be included in the above-mentioned positive electrode active material layer 11, may be in contact with the below-mentioned negative electrode current collector 32, may be included in the below-mentioned negative electrode active material layer 31, and may be held between the positive electrode 10 and the negative electrode 30 by the separator 40.

### 2.1 Solvent

The aqueous electrolyte solution 20 contains water as a solvent. The solvent contains water as a main component. Namely, water accounts for 50 mol% or more and 100 mol% or less of the total amount of the solvent constituting the aqueous electrolyte solution (100 mol%). Water may account for 70 mol% or more, 90 mol% or more, or 95 mol% or more of the total amount of the solvent. Meanwhile, the upper limit of the proportion of water in the solvent is not particularly limited. The solvent may be composed only of water (100 mol% water).

The solvent may contain, in addition to water, any solvent other than water, for example, from the viewpoint of forming solid electrolyte interphase (SEI) on the surface of the active material, as long as the above problems can be solved. Examples of solvents other than water include one or more organic solvents selected from ethers, carbonates, nitriles, alcohols, ketones, amines, amides, sulfur compounds, and hydrocarbons. The solvents other than water may account for 50 mol% or less, 30 mol% or less, 10 mol% or less, or 5 mol% or less of the total amount of solvents constituting the electrolyte solution (100 mol%).

### 2.2 Electrolyte

An electrolyte is dissolved in the aqueous electrolyte solution 20, and the electrolyte may dissociate into cations and anions in the aqueous electrolyte solution 20. In the aqueous electrolyte solution 20, such cations and anions may form aggregates (associations).

### 2.2.1 Potassium Polyphosphate

The aqueous electrolyte solution 20 contains potassium polyphosphate dissolved in the water. "Potassium polyphosphate" refers to a salt of polyphosphoric acid which may have at least some hydrogen substituted by potassium. Namely, "potassium polyphosphate" is classified as a concept encompassing potassium hydrogen polyphosphate. Specific examples of the potassium polyphosphate include potassium pyrophosphate (K4-xHxP2O7), potassium tripolyphosphate (K5-xHxP3O10), and the like. In particular, when potassium pyrophosphate (K4-xHxP2O7) is used as the potassium polyphosphate, much higher performance is easily ensured. In the aqueous electrolyte solution 20, "potassium polyphosphate dissolved in water" may be present as potassium ions, polyphosphate ions or aggregates (associations) of these ions, or aggregates (associations) with ions derived from any of the below-mentioned potassium hydrogen phosphate, phosphoric acid, polyphosphoric acid and carboxylic acid. In the aqueous electrolyte solution 20, "concentration of potassium polyphosphate dissolved in water" can be specified by converting ions, aggregates (associations), and the like contained in the aqueous electrolyte solution 20 into potassium polyphosphate. The "potassium polyphosphate dissolved in water" in the present application may be the above-mentioned ions or aggregates (associations) thereof, formed in the aqueous electrolyte solution 20 as a result of separate addition of a cation source (for example, potassium compound) and an anion source (for example, polyphosphoric acid) to the aqueous electrolyte solution 20.

The concentration of the potassium polyphosphate in the aqueous electrolyte solution 20 is not particularly limited. According to the inventors' new findings, when the aqueous electrolyte solution 20 contains the potassium polyphosphate dissolved at a concentration of 3 mol or more per 1 kg of the water, particularly the potassium polyphosphate dissolved at a concentration of 3 mol or more and 6 mol or less per 1 kg of the water, particularly the potassium polyphosphate dissolved at a concentration of 4 mol or more and 6 mol or less per 1 kg of the water, still particularly the potassium polyphosphate dissolved at a concentration of 4 mol or more and 5 mol or less per 1 kg of the water, not only the Al elution suppression effect by the current collector, but also the effect of enhancing other properties of the electrolyte solution, such as electrochemical stability, can be expected. When the concentration of the potassium pyrophosphate in the aqueous electrolyte solution 20 is such a concentration, the aqueous electrolyte solution 20 having no freezing point at -40°C or higher is easily obtained.

### 2.2.2 Potassium Hydrogen Phosphate and Phosphoric Acid (K3-xHxPO4 (1 ≤ x ≤ 3)), Polyphosphoric Acid, And Carboxylic Acid

The aqueous electrolyte solution 20 includes at least one of potassium hydrogen phosphate, phosphoric acid, polyphosphoric acid and carboxylic acid dissolved in the water. "Potassium hydrogen phosphate" may be one or both of potassium monohydrogen phosphate (K2HPO4) and potassium dihydrogen phosphate (KH2PO4). According to the inventors' new knowledge, when one or both of potassium monohydrogen phosphate and potassium dihydrogen phosphate in the aqueous electrolyte solution 20 are/is dissolved, a more excellent Al elution suppression effect is easily obtained. "Carboxylic acid" may be monovalent carboxylic acid or polyvalent carboxylic acid, and may be, for example, acetic acid. In the aqueous electrolyte solution 20, "potassium hydrogen phosphate dissolved in water" and "phosphoric acid dissolved in water" may be present as ions such as K⁺, H⁺, PO₄³⁻, KPO₄²⁻, HPO₄²⁻, K₂PO₄⁻, H₂PO₄⁻, and KHPO₄⁻, aggregates (associations) with these ions, or aggregates (associations) with ions derived from the above-mentioned potassium polyphosphate, "polyphosphoric acid dissolved in water" may be present as H⁺ , polyphosphate anions, or aggregates (associations) with ions derived from the above-mentioned potassium polyphosphate, and "carboxylic acid dissolved in water" may be present as H + , carboxylate anions, or aggregates (associations) with ions derived from the above-mentioned potassium polyphosphate. In the aqueous electrolyte solution 20, ions, aggregates (associations), and the like contained in the aqueous electrolyte solution 20 can be converted into potassium hydrogen phosphate, phosphoric acid, polyphosphoric acid, or carboxylic acid, thereby specifying "concentration of potassium hydrogen phosphate in water", "concentration of phosphoric acid in water, or "concentration of polyphosphoric acid in water, or "concentration of carboxylic acid in water". The "potassium hydrogen phosphate dissolved in water" in the present application may be ions such as K⁺, H⁺, PO₄³⁻, KPO₄²⁻, HPO₄²⁻, K₂PO₄⁻, H₂PO₄⁻, and KHPO₄⁻ or aggregates (associations) thereof, formed in the aqueous electrolyte solution 20 as a result of separate addition of a cation source (for example, potassium compound) and an anion source (for example, phosphoric acid) to the aqueous electrolyte solution 20. The same also applies to "carboxylic acid dissolved in water".

The concentrations of potassium hydrogen phosphate, phosphoric acid, polyphosphoric acid, and carboxylic acid in the aqueous electrolyte solution 20 are not particularly limited. According to the inventors' new findings, an excellent Al elution suppression effect is obtained by dissolving not only potassium pyrophosphate, but also potassium hydrogen phosphate, phosphoric acid, polyphosphoric acid, or carboxylic acid in the aqueous electrolyte solution 20. In the aqueous electrolyte solution 20, the molar ratio of the total of potassium hydrogen phosphate, phosphoric acid, polyphosphoric acid and carboxylic acid to potassium polyphosphate ([potassium hydrogen phosphate + phosphoric acid + polyphosphoric acid + carboxylic acid]/ potassium polyphosphate) may be, for example, more than 0 and 20.00 or less, more than 0 and 15.00 or less, more than 0 and 10.00 or less, more than 0 and 8.50 or less, more than 0 and 7.00 or less, more than 0 and 5.00 or less, more than 0 and 3.00 or less, or more than 0 and 1.00 or less.

According to the inventors' new findings, when the aqueous electrolyte solution 20 contains potassium dihydrogen phosphate dissolved in the water, and the concentration of K in the aqueous electrolyte solution 20 is 11.16 mol/L or more and 14.94 mol/L or less, particularly, 11.18 mol/L or more and 13.56 mol/L or less, still particularly, 11.46 mol/L or more and 12.62 mol/L or less, the Al elution suppression effect is more remarkable.

### 2.2.3 Cation

The aqueous electrolyte solution 20 may contain potassium ions as cations. In the aqueous electrolyte solution 20, some of potassium ions contained in the aqueous electrolyte solution 20 can be converted as "potassium polyphosphate dissolved", and some thereof can be converted as "potassium hydrogen phosphate dissolved". Herein, the aqueous electrolyte solution 20 may contain more potassium ions than the concentration which can be converted as potassium polyphosphate and potassium hydrogen phosphate. For example, if a potassium ion source (for example, KOH, CH3COOK, K3PO4, K5P3O10, K6P4O13, K7P5O16, (KPO3)n, etc.) other than potassium polyphosphate and potassium hydrogen phosphate is added and dissolved in water together with potassium polyphosphate and potassium hydrogen phosphate during production of the aqueous electrolyte solution 20, the aqueous electrolyte solution 20 will contain more potassium ions than the concentration which can be converted as potassium polyphosphate and potassium hydrogen phosphate. The aqueous electrolyte solution 20 may contain other cations as long as the above problems can be solved. For example, alkali metal ions other than potassium ions, alkaline earth metal ions, transition metal ions, and the like may be contained. The aqueous electrolyte solution 20 naturally contains protons.

### 2.2.4 Anion

The aqueous electrolyte solution 20 may contain polyphosphate ions (it may be present in a state of being linked to actions as mentioned above) and phosphate ions (it may be present in a state of being linked to actions as mentioned above) as anions. The aqueous electrolyte solution 20 may contain other anions as long as the above problems can be solved. For example, anions derived from other electrolytes mentioned below may be contained. The aqueous electrolyte solution 20 naturally contains hydroxide ions.

### 2.2.5 Other Components Containable in Aqueous Electrolyte Solution

The aqueous electrolyte solution 20 may contain other electrolytes. For example, the aqueous electrolyte solution may contain at least one selected from KPF6, KBF4, K2SO4, KNO3, (CF3SO2)2NK, KCF3SO3, (FSO2)2NK, K2HPO4, KH2PO4, KPO3, and the like. Such other electrolytes may account for 50 mol% or less, 30 mol% or less, or 10 mol% or less of the total amount of electrolytes dissolved in the electrolyte solution (100 mol%). The aqueous electrolyte solution 20 may contain various additives in addition to the above-mentioned electrolytes.

### 2.3 Other Properties

As long as the aqueous electrolyte solution 20 contains the solvents and electrolytes mentioned above, there is no particular limitation on other properties. An example of other properties of the aqueous electrolyte solution 20 will be described below.

### 2.3.1 Freezing Point

The aqueous electrolyte solution 20 may have no freezing point at -40°C or higher. The presence or absence of "freezing point" of the aqueous electrolyte solution 20 is confirmed by differential scanning calorimetry (DSC). Note that the DSC sweep rate is set at 5°C/min for both descending temperature and ascending temperature, and the sweep range is set as follows: temperature descending to -120°C from room temperature, followed by temperature ascending to 40°C. The atmosphere in DSC is an atmosphere of inert gas such as Ar, and the pressure is equal to the atmospheric pressure. However, since a sealed aluminum container is used for the evaluation, the atmosphere inside the container is the sealed atmosphere under atmospheric pressure. If the crystallization peak temperature (freezing point temperature) is not confirmed at -40°C or higher when the aqueous electrolyte solution is measured under the above conditions, the aqueous electrolyte solution is considered to have "no freezing point at -40°C or higher". The aqueous electrolyte solution 20 may have no freezing point at -60°C or higher, no freezing point at -80°C or higher, no freezing point at -100°C or higher, or no freezing point at -120°C or higher. In order to achieve the conditions that "aqueous electrolyte solution 20 has no freezing point at -40°C or higher" in the aqueous battery 100 of the present disclosure, it is effective to allow the concentration of the potassium polyphosphate, the concentration of the potassium hydrogen phosphate and phosphoric acid (K₃₋ₓHₓPO₄), and the concentration of the polyphosphoric acid to high concentrations in the aqueous electrolyte solution 20. When the aqueous electrolyte solution 20 has no freezing point at -40°C, the Al elution suppression effect is more easily enhanced. When the aqueous electrolyte solution 20 has no freezing point at -40°C, it is also possible to use the aqueous battery 100 even at extremely low temperature. Namely, the aqueous battery 100 operates properly even in cold district.

### 2.3.2 Presence or Absence of Precipitation of Salt

The aqueous electrolyte solution 20 may not involve salt precipitation when cooled from 0°C to -40°C. When the aqueous electrolyte solution 20 does not involve salt precipitation due to temperature change, it becomes possible to perform stable ionic conduction even at low temperature. For example, the aqueous battery 100 can be used even at extremely low temperature in cold district. The aqueous electrolyte solution 20 includes water, potassium polyphosphate dissolved in the water, and the like, as mentioned above. According to the inventors' new knowledge, the saturation solubility of potassium polyphosphate, potassium hydrogen phosphate, or the like in water has low temperature dependence and scarcely changes at low temperature of 0°C or lower. In this respect, even if the aqueous electrolyte solution 20 is cooled from 0°C to - 40°C, salt precipitation in the aqueous electrolyte solution 20 hardly occurs.

### 2.3.3 Viscosity

If the viscosity of the aqueous electrolyte solution 20 is too high, the ionic conductivity of the aqueous electrolyte solution 20 may deteriorate. Meanwhile, if potassium pyrophosphate or the like is dissolved at high concentration in the aqueous electrolyte solution 20, the aqueous electrolyte solution 20 may have a certain level or more of the viscosity. From the above point of view, the aqueous electrolyte solution 20 may have a viscosity of 20 mPa·s or more and 400 mPa·s or less at 20°C. The viscosity may be 350 mPa·s or less, 300 mPa·s or less, 250 mPa·s or less, or 200 mPa·s or less.

### 2.3.4 pH

The pH of the aqueous electrolyte solution 20 is not particularly limited. However, if the pH of the aqueous electrolyte solution 20 is too high, the potential window on the oxidation side of the aqueous electrolyte solution may be narrow. In this respect, the pH of the aqueous electrolyte solution 20 may be 3 or more and 13 or less. The pH may be 4 or more, 5 or more, 6 or more, or 7 or more, and may be 12 or less, 11 or less, 10 or less, or 9 or less. In particular, when the pH of the aqueous electrolyte solution 20 is 3 or more and 12 or less, particularly, 4 or more and 11 or less, still particularly, 5 or more and 10 or less, a more excellent Al elution suppression effect is easily obtained.

### 2.4 Variation

The aqueous electrolyte solution 20 may have the following structure in one embodiment. Namely, an aqueous electrolyte solution 20 according to one embodiment is characterized by including water, polyphosphate ions, at least one of hydrogen phosphate ions, phosphate ions and carboxylate ions, and potassium ions.

### 3. Negative Electrode

It is possible to use, as the negative electrode 30, any known negative electrode for an aqueous battery. As shown in FIG. 1, the negative electrode 30 may include a negative electrode active material layer 31 and a negative electrode current collector 32.

### 3.1 Negative Electrode Active Material Layer

The negative electrode active material layer 31 contains a negative electrode active material. The negative electrode active material layer 31 is impregnated with the aqueous electrolyte solution 20. The negative electrode active material layer 31 may contain, in addition to the negative electrode active material, a conductive aid, a binder, and/or the like. The negative electrode active material layer 31 may also contain various other additives. The content of each component in the negative electrode active material layer 31 may be appropriately determined according to the objective battery performance. For example, the content of the negative electrode active material may be 40% by mass or more, 50% by mass or more, 60% by mass or more, or 70% by mass or more, and may be 100% by mass or less, or 90% by mass or less, based on 100% by mass of the entire negative electrode active material layer 31 (total solid content). The shape of the negative electrode active material layer 31 is not particularly limited, and the negative electrode active material layer may be, for example, a sheet-shaped negative electrode active material layer having an approximately flat surface. The thickness of the negative electrode active material layer 31 is not particularly limited, and may be, for example, 0.1 µm or more, 1 µm or more, or 10 µm or more, and may be 2 mm or less, 1 mm or less, or 500 µm or less.

Any substance capable of functioning as the negative electrode active material of the aqueous battery can be used as the negative electrode active material. The negative electrode active material has a lower charge-discharge potential than that of the above-mentioned positive electrode active material, and can be appropriately selected in consideration of the potential window and the like of the above-mentioned aqueous electrolyte solution 20. In the present embodiment, various ions derived from the aqueous electrolyte solution can serve as charge compensation ions. Specifically, charge compensation ions inserted and deinserted by the negative electrode active material may be, for example, one, or two or more of potassium ions, protons, electrolyte-derived anions, and hydroxide ions. For example, the negative electrode active material may be alkali metal-transition metal composite oxide; titanium oxide; metal sulfides such as Mo6S8; elemental sulfur; alkali metal-titanium composite phosphate compounds; NASICON-type compounds; WO3, and the like. Alternatively, the negative electrode active material may be a hydrogen storage alloy. Alternatively, the negative electrode active material may be an inorganic compound having a crystal structure belonging to a space group I23. The crystal structure belonging to a space group I23 may contain, for example, an element A, an element M, and O. The element A is at least one of Bi and La, the element M may be at least one of Bi, Mn, Fe, Co and Ni, or both the element A and the element M may be Bi. The negative electrode active material may be one which inserts and deinserts charge compensation ions by intercalation, or which inserts and deinserts charge compensation ions by a conversion reaction or an alloying reaction. Only one negative electrode active material may be used alone, or two or more thereof may be used in combination.

The shape of the negative electrode active material may be any shape capable of functioning as the negative electrode active material of the battery. For example, the negative electrode active material may be in the form of particles. The negative electrode active material may be a solid material, a hollow material, a material with voids, or a porous material. The negative electrode active material may be a primary particle, or a secondary particle obtained by agglomeration of a plurality of primary particles. The mean particle diameter D50 of the negative electrode active material may be, for example, 1 nm or more, 5 nm or more, or 10 nm or more, and may be 500 µm or less, 100 µm or less, 50 µm or less, or 30 µm or less.

Examples of the conductive aid which can be contained in the negative electrode active material layer 31 include carbon materials such as vapor-phase-grown carbon fiber (VGCF), acetylene black (AB), Ketjen black (KB), carbon nanotube (CNT) and carbon nanofiber (CNF); and metal materials such as nickel, titanium, aluminum, stainless steel and the like which are slightly insoluble (poorly soluble) in an electrolyte solution. The conductive aid may be, for example, in the form of particles or fibers, and the size thereof is not particularly limited. Only one conductive aid may be used alone, or two or more thereof may be used in combination.

Examples of the binder which can be contained in the negative electrode active material layer 31 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders and the like. Only one binder may be used alone, or two or more thereof may be used in combination.

### 3.2 Negative Electrode Current Collector

As shown in FIG. 1, the negative electrode 30 may include a negative electrode current collector 32 in contact with the negative electrode active material layer 31. The negative electrode current collector 32 is in contact with an aqueous electrolyte solution 20. It is possible to use, as the negative electrode current collector 32, any material capable of functioning as the negative electrode current collector of the aqueous battery. When the above-mentioned positive electrode current collector 12 contains Al, the negative electrode current collector 32 may contain Al or may not contain Al. When the above-mentioned positive electrode current collector 12 does not contain Al, the negative electrode current collector 32 contains Al.

When the negative electrode current collector 32 contains Al, the entire negative electrode current collector 32 may be composed of Al, or at least a portion of the surface thereof may be composed of Al. For example, the negative electrode current collector 32 may be made of an Al foil, or the surface of a metal foil or some base material may be coated with Al. The negative electrode current collector 32 may be one in which Al is present on at least a portion of the surface in contact with the aqueous electrolyte solution 20, or one in which Al is present over the entire surface in contact with the aqueous electrolyte solution 20.

The negative electrode current collector 32 may be in the form of foil, plate, mesh, perforated metal and foam. The negative electrode current collector 32 may be formed of a metal foil or a metal mesh. In particular, the metal foil is excellent in ease of handling or the like. The negative electrode current collector 32 may be composed of a plurality of foils. Examples of the metal material constituting the negative electrode current collector 32 include those containing at least one element selected from the group consisting of Cu, Ni, Al, V, Au, Pt, Mg, Fe, Ti, Pb, Co, Cr, Zn, Ge, In, Sn, and Zr. In particular, the negative electrode current collector 32 preferably contains at least one element selected from the group consisting of Al, Ti, Pb, Zn, Sn, Mg, Zr and In, and preferably contains Al, as mentioned above. All of Al, Ti, Pb, Zn, Sn, Mg, Zr and In have low work functions, and even if the negative electrode current collector 32 comes into contact with the aqueous electrolyte solution 20, it is considered to be difficult for the aqueous electrolyte solution 20 to undergo electrolysis. The negative electrode current collector 32 may be one in which the above metal is plated or vapor-deposited on a metal foil or a base material. When the negative electrode current collector 32 is composed of a plurality of metal foils, the negative electrode current collector may have some layers between the plurality of metal foils. The thickness of the negative electrode current collector 32 is not particularly limited. For example, the thickness may be 0.1 µm or more, or 1 µm or more, and may be 1 mm or less, or 100 µm or less.

### 4. Other Structures

In the aqueous battery 100, various ions derived from the aqueous electrolyte solution 20 can function as carrier ions and charge compensation ions. The aqueous battery 100 may be an aqueous battery (aqueous proton battery) in which protons function as carrier ions and charge compensation ions, an aqueous battery (aqueous potassium ion battery) in which potassium ions function as carrier ions and charge compensation ions, an aqueous battery (aqueous hydroxide ion battery) in which hydroxide ions function as carrier ions and charge compensation ions, an aqueous battery (aqueous polyphosphate anion battery) in which polyphosphate anions function as carrier ions and charge compensation ions, or an aqueous battery in which other ions derived from the aqueous electrolyte solution 20 function as carrier ions and charge compensation ions. In the aqueous battery 100, a plurality of ions derived from the aqueous electrolyte solution 20 may function as carrier ions and charge compensation ions. The aqueous battery 100 may have, in addition to the above-mentioned basic structure, the following other structures.

### 4.1 Separator

As mentioned above, a separator 40 may be present between the positive electrode 10 and the negative electrode 30 in the aqueous battery 100. The separator 40, which may be used, is a separator used in a conventional aqueous electrolyte solution battery (nickel-metal hydride battery, zinc air battery, etc.). For example, the separator is a separator having the hydrophilicity, such as non-woven fabrics made of a cellulose material. The thickness of the separator 40 is not particularly limited, and may be, for example, 5 µm or more and 1 mm or less.

### 4.2 Bipolar Structure

As mentioned above, in the aqueous battery 100, both the positive electrode current collector 12 and the negative electrode current collector 32 may contain Al. In this regard, in the aqueous battery 100, a current collector containing Al may be used as a bipolar current collector which serves as both the positive electrode current collector 12 and the negative electrode current collector 32. Namely, the positive electrode 10 and the negative electrode 30 may share one current collector. FIG. 2 shows an example of a bipolar structure. As shown in FIG. 2, the aqueous battery 100 may have a bipolar structure, and a positive electrode active material layer 11 may be formed on one side of an Al-containing current collector 50 (bipolar current collector which functions as both the positive electrode current collector 12 and the negative electrode current collector 32) and a negative electrode active material layer 31 may be formed on the other side of the current collector 50. In this case, the Al-containing current collector 50 may not have liquid permeability, that is, the aqueous electrolyte solution 20 may not permeate from the positive electrode active material layer 11 to the negative electrode active material layer 31 via the current collector 50 and vice versa.

### 4.3 Terminal or the like

The aqueous battery 100 may include, in addition to the above structure, a terminal, a battery case and the like. Other structures are obvious to those skilled in the art who refer to the present application, and therefore explanation will be omitted here.

### 5. Method for Producing Aqueous Battery

The aqueous battery 100 of the present disclosure can be produced, for example, as follows.

### 5.1 Method for Producing Aqueous Electrolyte Solution

The aqueous electrolyte solution 20 can be produced, for example, by mixing water, potassium polyphosphate, and at least one of potassium hydrogen phosphate, phosphoric acid and polyphosphoric acid. Alternatively, the aqueous electrolyte solution can also be produced by mixing water, a potassium ion source, a polyphosphate ion source, and a phosphate ion source. The mixing method is not particularly limited, and any known mixing method can be used. By simply filling a container with water, potassium polyphosphate, and at least one of potassium hydrogen phosphate, phosphoric acid and polyphosphoric acid, followed by standing, they are mixed with one another to finally obtain an aqueous electrolyte solution 20.

### 5.2 Production of Positive Electrode

The positive electrode 10 is produced, for example, as follows. A positive electrode active material and etc. constituting the positive electrode active material layer 11 are dispersed in a solvent to obtain a positive electrode mixture paste (slurry). The solvent used in this case is not particularly limited, and water and various organic solvents can be used. Using a doctor blade or the like, the positive electrode mixture paste (slurry) is applied on the surface of the positive electrode current collector 12, and then dried to form a positive electrode active material layer 11 on the surface of the positive electrode current collector 12, thus obtaining a positive electrode 10. It is possible to use, as the coating method, an electrostatic coating method, a dip coating method, a spray coating method and the like, including a doctor blade method.

### 5.3 Production of Negative Electrode

The negative electrode 30 is produced, for example, as follows. A negative electrode active material and etc. constituting the negative electrode active material layer 31 are dispersed in a solvent to obtain a negative electrode mixture paste (slurry). The solvent used in this case is not particularly limited, and water and various organic solvents can be used. Using a doctor blade or the like, the negative electrode mixture paste (slurry) is applied on the surface of the negative electrode current collector 32, and then dried to form a negative electrode active material layer 31 on the surface of the negative electrode current collector 32, thus obtaining a negative electrode 30. It is possible to use, as the coating method, an electrostatic coating method, a dip coating method, a spray coating method and the like, including a doctor blade method.

### 5.4 Housing or the like in Battery Case

The aqueous electrolyte solution 20, the positive electrode 10 and the negative electrode 30 are housed in a battery case to obtain an aqueous battery 100. For example, the separator 40 is sandwiched between the positive electrode 10 and the negative electrode 30 to obtain a laminate including the positive electrode current collector 12, the positive electrode active material layer 11, the separator 40, the negative electrode active material layer 31 and the negative electrode current collector 32 in this order. Other members such as terminal are attached to the laminate as necessary. The laminate is housed in a battery case and the battery case is filled with the aqueous electrolyte solution 20, and the laminate and the electrolyte solution are sealed in the battery case so that the laminate is immersed in the aqueous electrolyte solution 20 to obtain an aqueous battery 100.

### 6. Effect by Aqueous Battery of Present Disclosure

According to the aqueous battery 100 of the present disclosure, it is possible to suppress elution of Al from the current collector into the aqueous electrolyte solution 20 by the following function and effect.

### 6.1 Function and Effect when Al is contained in Positive Electrode Current Collector

During charging and discharging of the battery, the potential of the positive electrode becomes the potential on the oxidation side. Therefore, Al contained in the positive electrode current collector emits electrons, leading to an easily dissolvable state. Specifically, Al contained in the positive electrode current collector dissolves into the aqueous electrolyte solution while coordinating with anions and water molecules contained in the aqueous electrolyte solution. Here, potassium polyphosphate is dissolved in the aqueous electrolyte solution 20 in the aqueous battery 100 of the present disclosure. In other words, anions derived from potassium polyphosphate, such as polyphosphate ions, may be present in the aqueous electrolyte solution 20. Therefore, in the aqueous battery 100 of the present disclosure, Al contained in the positive electrode current collector 12 is easily coordinated with anions derived from potassium polyphosphate. Here, for example, aluminum polyphosphate has extremely low solubility in the aqueous electrolyte solution 20. Therefore, Al coordinated with anions derived from potassium polyphosphate is quickly precipitated as a solid. In other words, an insoluble or poor soluble Al compound is precipitated near the surface of the positive electrode current collector 12, and the Al compound adheres to the surface of the positive electrode current collector 12 to form a protective film (passive film) on the surface. As a result, in the aqueous battery 100 of the present disclosure, it is possible to suppress elution of Al from the positive electrode current collector 12 to the aqueous electrolyte solution 20 by the protective film.

Potassium hydrogen phosphate, phosphoric acid, polyphosphoric acid, and/or carboxylic acid are/is dissolved in the aqueous electrolyte solution 20 in the aqueous battery 100 of the present disclosure. According to the inventors' new findings, when potassium hydrogen phosphate, phosphoric acid, polyphosphoric acid, and/or carboxylic acid are/is dissolved together with potassium polyphosphate in the aqueous electrolyte solution 20, the onset potential of the passivation can significantly increase and the effect of Al elution suppression can be significantly improved. When potassium hydrogen phosphate, phosphoric acid, polyphosphoric acid, and/or carboxylic acid are/is dissolved together with potassium polyphosphate in the aqueous electrolyte solution 20, not only the above-mentioned passivation effect by potassium polyphosphate is obtained, but also the pH of the aqueous electrolyte solution 20 can be lowered. It is also considered that the effect by mixing polyphosphate anions and other anions in the aqueous electrolyte solution and the effect due to an increase in anion concentration are exerted. Namely, it is considered that, while performance of the aqueous electrolyte solution 20 is maintained, a passive film of Al formed on the surface of the current collector is more stabilized.

### 6.2 Function and Effect when Al is contained in Negative Electrode Current Collector

During charging and discharging of the battery, the potential of the negative electrode becomes the potential on the reduction side. Therefore, electrolysis of the aqueous electrolyte solution in contact with the negative electrode causes generation of hydroxide ions, and the pH of the aqueous electrolyte solution in the vicinity of the negative electrode tends to increase. When the pH of the aqueous electrolyte solution in the vicinity of the negative electrode increases, the solubility of Al in the aqueous electrolyte solution increases, and the Al contained in the negative electrode current collector is easily eluted into the aqueous electrolyte solution. In contrast, potassium polyphosphate is dissolved in the aqueous electrolyte solution 20 in the aqueous battery 100 of the present disclosure, as mentioned above. Therefore, in the aqueous battery 100 of the present disclosure, even if Al contained in the negative electrode current collector 32 is eluted into the aqueous electrolyte solution 20, Al is quickly coordinated with anions derived from potassium polyphosphate, and formed into an Al compound and deposited as a solid. In other words, an insoluble or poor soluble Al compound is precipitated near the surface of the negative electrode current collector 32, and the Al compound adheres to the surface of the negative electrode current collector 32 to form a protective film (passive film) on the surface. As a result, in the aqueous battery 100 of the present disclosure, it is possible to suppress elution of Al from the negative electrode current collector 32 to the aqueous electrolyte solution 20 by the protective film.

In the aqueous battery 100 of the present disclosure, as described above, potassium hydrogen phosphate, phosphoric acid, polyphosphoric acid, and/or carboxylic acid are/is dissolved in the aqueous electrolyte solution 20, and the pH of the aqueous electrolyte solution 20 is easily kept low as compared with a case where potassium hydrogen phosphate, phosphoric acid, polyphosphoric acid, and/or carboxylic acid are/is not dissolved. Namely, in the aqueous battery 100 of the present disclosure, an increase in pH in the vicinity of the negative electrode is easily suppressed and the solubility of Al in the vicinity of the negative electrode is easily low. It is also considered that the effect by mixing polyphosphate anions and other anions in the aqueous electrolyte solution and the effect due to an increase in anion concentration are exerted. Also in this regard, it is considered that Al contained in the negative electrode current collector is hardly eluted into the aqueous electrolyte solution 20.

### 6.3 Other Effects

In aqueous electrolyte solution batteries, those containing Ti and Ni are used as current collectors to prevent corrosion of such current collectors (for example, PTL 1). It has been considered difficult to adopt metals other than these because they elute at, for example, positive electrode potential. However, since Ti and Ni are expensive, an alternative technology using less expensive metals is needed for the widespread use of aqueous electrolyte solution batteries. In this respect, in the aqueous battery 100 of the present disclosure, those containing Al are used as current collectors to reduce the overall cost of the battery, while the above-mentioned aqueous electrolyte solution 20 is employed to allow for suppression of elution of Al from the current collector to the aqueous electrolyte solution.

### 7. Use of Aqueous Battery

As mentioned above, according to the aqueous battery of the present disclosure, it is possible to suppress elution of Al from the current collector to the aqueous electrolyte solution. Namely, deterioration of the battery is easily suppressed. Such an aqueous battery can be suitably used, for example, in at least one vehicle selected from a hybrid electric vehicle (HEV), a plug in hybrid electric vehicle (PHEV), and a battery electric vehicle (BEV). Namely, the technology of the present disclosure also has an aspect as a vehicle having an aqueous battery, the aqueous battery including a positive electrode, an aqueous electrolyte solution and a negative electrode, wherein one or both of the positive electrode and the negative electrode has/have a current collector containing Al, and the aqueous electrolyte solution contains water, potassium polyphosphate dissolved in the water, and at least one of potassium hydrogen phosphate, phosphoric acid, polyphosphoric acid and carboxylic acid dissolved in the water. The details of the aqueous electrolyte solution and the details of the battery structure are as mentioned above.

### EXAMPLES

Hereinafter, the technology of the present disclosure will be described in more detail by way of Examples, but the technology of the present disclosure is not limited to the following Examples.

### 1. Comparative Examples 1 to 6

### 1.1 Fabrication of Aqueous Electrolyte Solution

Only potassium pyrophosphate (K4P2O7) was dissolved at a predetermined concentration in pure water to obtain an aqueous electrolyte solution according to each of Comparative Examples 1 to 6. The concentration of K4P2O7, the concentration of K, and the pH in each of the aqueous electrolyte solutions are as shown in Table 1 below. Here, the concentration of K was measured with ICP, and the pH was measured with a pH meter (Sevenmulti, manufactured by Mettler-Toledo).

### 1.2 Electrochemical Measurement

An Al foil was used for a working electrode, a Ni foil was used for a counter electrode, Ag/AgCl was used for a reference electrode, and the above aqueous electrolyte solution was used for an electrolyte solution to fabricate an electrochemical cell (SB1A, manufactured by Inter-Chemi). The electrochemical cell was evaluated by cyclic voltammetry under the following conditions.
Sweep rate: 1 mV/s
Sweep range: OCP to 1.0 V (vs. Ag/AgCl)
Number of cycles: 2 cycles in each case

After the above electrochemical measurement, the degree of elution of the Al foil into the aqueous electrolyte solution was evaluated on a three-point scale of the following A, B and C, from the cyclic voltammogram at the second cycle. The results are shown in Table 1 below.

A: In the case of an increase in potential from OCP, no current flows until the potential reaches a certain level or more (namely, passivation of the Al foil surface and no occurrence of elution of the Al foil until an increase in potential to a certain level or more).

B: An increase in potential from OCP allows a current to flow soon after the increase in potential, whereas a further increase in potential leads to gradual current convergence (namely, an elution reaction of the Al foil progresses immediately after the increase in potential, whereas a further increase in potential generates an equilibrium state between passivation and elution of the Al foil surface, an increase in elution rate of the Al foil is suppressed, and the suppression effect comparable with that in Comparative Example 4 is obtained.).

C: An increase in potential from OCP allows a current to flow soon after the increase in potential, and even a further increase in potential leads to no current convergence and allows a faradaic current to flow (namely, the Al foil is continuously eluted regardless of the potential).

### 1.3 Low-Temperature Stability Evaluation

After the aqueous electrolyte solution was retained in a constant-temperature bath at -60°C for 8 hours, the state of the aqueous electrolyte solution was visually observed to confirm the presence or absence of freezing. In the case of no freezing of the aqueous electrolyte solution, it can be said that the aqueous electrolyte solution has no freezing point at -60°C or higher. The results are shown in Table 1 below.

### 1.4 Evaluation Results

### [Table 1]

**(Table 1)**

| | Additive material | Concentration of K₄P₂O₇ (mol/kg) | Additive material/K₄P₂O₇ (molar ratio) | Concentration of K (mol/L) | pH | Evaluation of Al elution suppression | Presence or absence of freezing |
|---|---|---|---|---|---|---|---|
| Comparative Example 1 | None | 1.0 | 0 | 3.75 | 10.6 | C | Presence |
| Comparative Example 2 | None | 2.0 | 0 | 6.87 | 11.2 | C | Presence |
| Comparative Example 3 | None | 3.0 | 0 | 9.49 | 11.7 | C | Presence |
| Comparative Example 4 | None | 4.0 | 0 | 11.62 | 11.9 | B | Absence |
| Comparative Example 5 | None | 5.0 | 0 | 13.45 | 12.2 | B | Absence |
| Comparative Example 6 | None | 6.0 | 0 | 14.38 | 12.2 | B | Absence |

As clear from the results shown in Table 1, it can be seen that, while suppression of elution of the Al foil is difficult at a concentration of potassium pyrophosphate of less than 4 mol/kg in the aqueous electrolyte solution (Comparative Examples 1 to 3), suppression of elution of the Al foil can be made at a concentration of potassium pyrophosphate of 4 mol/kg or more in the aqueous electrolyte solution (Comparative Examples 4 to 6). However, in Comparative Examples 4 to 6, the pH of the aqueous electrolyte solution is about 12 and weakly alkaline, and thus the effect by passivation of Al in the aqueous electrolyte solution cannot be sufficiently exerted.

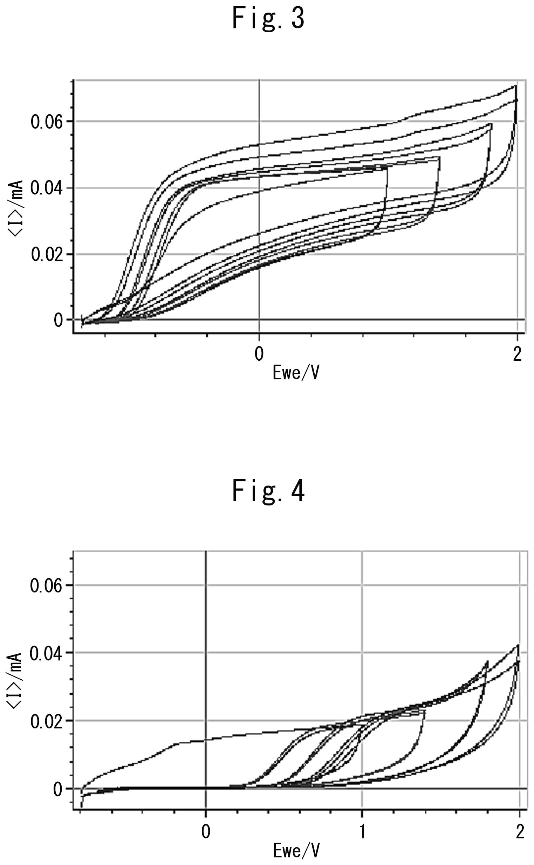

FIG. 3 shows a cyclic voltammogram in Comparative Example 5. As shown in FIG. 3, a behavior is exhibited in which a current according to elution of the Al foil flows with a slight increase in potential from OCP and the current converges therefrom (passivation), and a small amount of current flows even after repeating of the sweep and a clear change in CV curve shape is not observed even through 2 cycles in Comparative Example 5. The reason for this is considered because the state of the passive film formed on the surface of the Al foil is reset by returning the potential to OCP, and a rigid passive film can be present only in application of the potential, to suppress elution of Al. Namely, it can be said that there is room for improvement in stability of the current collector containing Al in Comparative Example 5.

### 2. Examples 1 to 20

### 2.1 Fabrication of Aqueous Electrolyte Solution

Potassium pyrophosphate (K4P2O7) and potassium dihydrogen phosphate (KH2PO4) as an additive material were dissolved in pure water at predetermined concentrations to obtain an aqueous electrolyte solution according to each of Examples 1 to 20. The concentration of K4P2O7, the molar ratio (additive material/K4P2O7) of the additive material to K4P2O7, the concentration of K, and the pH in each of the aqueous electrolyte solutions are as shown in Table 2 below.

### 2.2 Electrochemical Measurement

The aqueous electrolyte solution according to each of Examples 1 to 20 was used, and an electrochemical cell was produced and subjected to evaluation by cyclic voltammetry and evaluation on a three-point scale of the following A, B and C in the same manner as in Comparative Examples 1 to 6. The results are shown in Table 2 below.

### 2.3 Low-Temperature Stability Evaluation

The presence or absence of freezing of the aqueous electrolyte solution according to each of Examples 1 to 20 was confirmed in the same manner as in Comparative Examples 1 to 6. The results are shown in Table 2 below.

### 2.4 Evaluation Results

### [Table 2]

**(Table 2)**

| | Additive material | Concentration of K₄P₂O₇ (mol/kg) | Additive material/K₄P₂O₇ (molar ratio) | Concentration of K (mol/L) | pH | Evaluation of Al elution suppression | Presence or absence of freezing |
|---|---|---|---|---|---|---|---|
| Example 1 | KH₂PO₄ | 1.0 | 3.67 | 5.34 | 6.6 | B | Presence |
| Example 2 | KH₂PO₄ | 2.0 | 1.84 | 7.99 | 7.4 | B | Presence |
| Example 3 | KH₂PO₄ | 3.0 | 0.83 | 8.92 | 8.2 | B | Presence |
| Example 4 | KH₂PO₄ | 3.0 | 1.16 | 7.43 | 8.0 | B | Presence |
| Example 5 | KH₂PO₄ | 3.0 | 1.22 | 10.38 | 7.9 | B | Presence |
| Example 6 | KH₂PO₄ | 3.1 | 1.30 | 10.00 | 8.4 | B | Presence |
| Example 7 | KH₂PO₄ | 3.1 | 0.32 | 9.39 | 9.1 | B | Presence |
| Example 8 | KH₂PO₄ | 3.1 | 0.65 | 9.79 | 8.6 | B | Presence |
| Example 9 | KH₂PO₄ | 3.1 | 0.97 | 9.61 | 8.2 | B | Presence |
| Example 10 | KH₂PO₄ | 3.1 | 1.62 | 10.37 | 8.2 | B | Presence |
| Example 11 | KH₂PO₄ | 4.0 | 0.50 | 11.16 | 8.7 | A | Absence |
| Example 12 | KH₂PO₄ | 4.0 | 0.75 | 11.18 | 8.7 | A | Absence |
| Example 13 | KH₂PO₄ | 4.0 | 0.92 | 12.23 | 8.5 | A | Absence |
| Example 14 | KH₂PO₄ | 4.1 | 0.24 | 11.46 | 9.5 | A | Absence |
| Example 15 | KH₂PO₄ | 4.1 | 0.73 | 11.55 | 8.7 | A | Absence |
| Example 16 | KH₂PO₄ | 4.1 | 0.49 | 11.60 | 9.1 | A | Absence |
| Example 17 | KH₂PO₄ | 5.0 | 0.73 | 13.56 | 9.1 | A | Absence |
| Example 18 | KH₂PO₄ | 5.2 | 0.19 | 12.62 | 9.9 | A | Absence |
| Example 19 | KH₂PO₄ | 5.2 | 0.39 | 11.89 | 9.5 | A | Absence |
| Example 20 | KH₂PO₄ | 6.0 | 0.61 | 14.94 | 9.6 | A | Absence |

As clear from the results shown in Tables 1 and 2, it can be seen that the effect of suppressing elution of the Al foil is enhanced by dissolving potassium dihydrogen phosphate together with potassium pyrophosphate in the aqueous electrolyte solution. In particular, when the aqueous electrolyte solution contains potassium dihydrogen phosphate together with potassium pyrophosphate at a concentration of 3 mol/kg or more, particularly, contains potassium dihydrogen phosphate together with potassium pyrophosphate at a concentration of 4 mol/kg or more, the Al elution suppression effect is more remarkable.

FIG. 4 shows a cyclic voltammogram in Example 17. As shown in FIG. 4, it was found with respect to Example 17 that a large change in CV curve shape was observed in which the current immediately converged after turning of the first cycle with an increase in potential from OCP and no current flowed at the second cycle unless large sweep toward the noble potential against OCP was made. This suggests that, even in the case of stopping of potential application after formation of a firm passive film on the Al foil surface at the stage of the first cycle, the passive film is still present on the Al foil surface. Example 17 was considered to obtain such a remarkable Al elution suppression effect due to the influences of a low pH of the aqueous electrolyte solution, the mixing effect of pyrophosphate anions and phosphate anions in the aqueous electrolyte solution, and an increase in anion concentration. The same tendency could be confirmed also in other Examples than Example 17, and the same results were obtained particularly in Examples 11 to 20. As described above, the effect of suppressing elution of Al was enhanced and stability of the current collector containing Al was improved by dissolving potassium dihydrogen phosphate together with potassium pyrophosphate in the aqueous electrolyte solution.

### 3. Examples 21 to 53

### 3.1 Fabrication of Aqueous Electrolyte Solution

Potassium pyrophosphate (K4P2O7) and potassium monohydrogen phosphate (K2HPO4) as an additive material were dissolved in pure water at predetermined concentrations to obtain an aqueous electrolyte solution according to each of Examples 21 to 53. The concentration of K4P2O7, the molar ratio (additive material/K4P2O7) of the additive material to K4P2O7, the concentration of K, and the pH in each of the aqueous electrolyte solutions are as shown in Table 3 below.

### 3.2 Electrochemical Measurement

The aqueous electrolyte solution according to each of Examples 21 to 53 was used, and an electrochemical cell was produced and subjected to evaluation by cyclic voltammetry and evaluation on a three-point scale of the following A, B and C in the same manner as in Comparative Examples 1 to 6. The results are shown in Table 3 below.

### 3.3 Low-Temperature Stability Evaluation

The presence or absence of freezing of the aqueous electrolyte solution according to each of Examples 21 to 53 was confirmed in the same manner as in Comparative Examples 1 to 6. The results are shown in Table 3 below.

### 3.4 Evaluation Results

### [Table 3]

**(Table 3)**

| | Additive material | Concentration of K₄P₂O₇ (mol/kg) | Additive material/K₄P₂O₇ (molar ratio) | Concentration of K (mol/L) | pH | Evaluation of Al elution suppression | Presence or absence of freezing |
|---|---|---|---|---|---|---|---|
| Example 21 | K₂HPO₄ | 1.0 | 3.67 | 13.53 | 10.6 | B | Absence |
| Example 22 | K₂HPO₄ | 1.0 | 5.32 | 9.77 | 10.5 | B | Presence |
| Example 23 | K₂HPO₄ | 1.0 | 6.85 | 10.88 | 10.5 | B | Absence |
| Example 24 | K₂HPO₄ | 1.0 | 7.66 | 10.90 | 10.6 | B | Absence |
| Example 25 | K₂HPO₄ | 1.0 | 8.62 | 11.73 | 11.1 | B | Absence |
| Example 26 | K₂HPO₄ | 1.0 | 10.53 | 12.78 | 10.9 | B | Absence |
| Example 27 | K₂HPO₄ | 1.0 | 11.97 | 12.62 | 11.0 | B | Absence |
| Example 28 | K₂HPO₄ | 2.0 | 1.84 | 15.13 | 10.8 | B | Absence |
| Example 29 | K₂HPO₄ | 2.1 | 6.58 | 11.66 | 11.0 | B | Absence |
| Example 30 | K₂HPO₄ | 2.1 | 1.32 | 9.63 | 10.7 | B | Presence |
| Example 31 | K₂HPO₄ | 2.1 | 2.27 | 11.23 | 11.1 | B | Absence |
| Example 32 | K₂HPO₄ | 2.1 | 2.99 | 11.21 | 10.9 | B | Absence |
| Example 33 | K₂HPO₄ | 2.1 | 3.44 | 11.66 | 11.4 | B | Absence |
| Example 34 | K₂HPO₄ | 2.1 | 4.48 | 13.05 | 11.0 | B | Absence |
| Example 35 | K₂HPO₄ | 3.1 | 0.76 | 11.74 | 10.9 | B | Absence |
| Example 36 | K₂HPO₄ | 3.1 | 1.34 | 11.63 | 11.0 | B | Absence |
| Example 37 | K₂HPO₄ | 3.0 | 1.22 | 16.07 | 11.1 | A | Absence |
| Example 38 | K₂HPO₄ | 3.1 | 3.11 | 13.72 | 11.3 | A | Absence |
| Example 39 | K₂HPO₄ | 3.1 | 2.39 | 12.95 | 11.2 | A | Absence |
| Example 40 | K₂HPO₄ | 3.1 | 3.55 | 12.49 | 11.2 | A | Absence |
| Example 41 | K₂HPO₄ | 4.0 | 0.92 | 16.36 | 11.3 | A | Absence |
| Example 42 | K₂HPO₄ | 4.1 | 0.52 | 12.15 | 11.5 | A | Absence |
| Example 43 | K₂HPO₄ | 4.1 | 0.81 | 13.31 | 11.3 | A | Absence |
| Example 44 | K₂HPO₄ | 4.1 | 1.04 | 13.38 | 11.3 | A | Absence |
| Example 45 | K₂HPO₄ | 4.1 | 1.67 | 13.00 | 11.5 | A | Absence |
| Example 46 | K₂HPO₄ | 4.1 | 2.04 | 11.82 | 11.5 | A | Absence |
| Example 47 | K₂HPO₄ | 5.0 | 0.73 | 16.14 | 11.6 | A | Absence |
| Example 48 | K₂HPO₄ | 5.2 | 0.88 | 12.80 | 11.5 | A | Absence |
| Example 49 | K₂HPO₄ | 5.2 | 1.00 | 13.27 | 11.5 | A | Absence |
| Example 50 | K₂HPO₄ | 5.2 | 1.13 | 14.00 | 11.5 | A | Absence |
| Example 51 | K₂HPO₄ | 5.2 | 0.28 | 12.71 | 11.5 | A | Absence |
| Example 52 | K₂HPO₄ | 5.2 | 0.57 | 13.48 | 11.5 | A | Absence |
| Example 53 | K₂HPO₄ | 6.0 | 0.61 | 14.68 | 11.7 | A | Absence |

As clear from the results shown in Tables 1 and 3, it can be seen that the effect of suppressing elution of the Al foil is enhanced by dissolving potassium monohydrogen phosphate together with potassium pyrophosphate in the aqueous electrolyte solution. In particular, when the aqueous electrolyte solution contains potassium monohydrogen phosphate together with potassium pyrophosphate at a concentration of 3 mol/kg or more, particularly, contains potassium monohydrogen phosphate together with potassium pyrophosphate at a concentration of 4 mol/kg or more, the Al elution suppression effect is more remarkable.

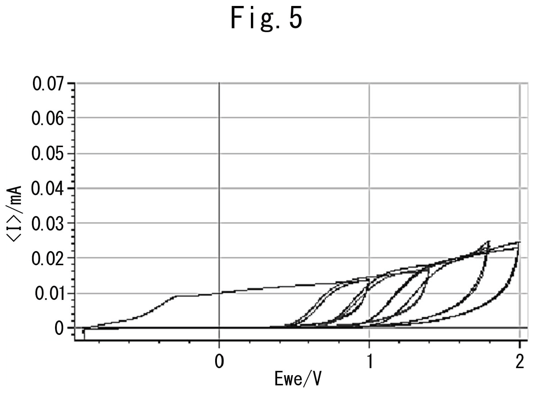

FIG. 5 shows a cyclic voltammogram in Example 47. As shown in FIG. 5, it was found with respect to Example 47 that, as in Example 17 shown in FIG. 4, a large change in CV curve shape was observed in which the current immediately converged after turning of the first cycle with an increase in potential from OCP and no current flowed at the second cycle unless large sweep toward the noble potential against OCP was made. The same tendency could be confirmed also in other Examples than Example 47, and the same results were obtained particularly in Examples 37 to 53. As described above, the effect of suppressing elution of Al was enhanced and stability of the current collector containing Al was improved by dissolving potassium monohydrogen phosphate together with potassium pyrophosphate in the aqueous electrolyte solution.

### 4. Examples 54 to 65

### 4.1 Fabrication of Aqueous Electrolyte Solution

Potassium pyrophosphate (K4P2O7) and phosphoric acid (H3PO4) as an additive material were dissolved in pure water at predetermined concentrations to obtain an aqueous electrolyte solution according to each of Examples 54 to 65. The concentration of K4P2O7, the molar ratio (additive material/K4P2O7) of the additive material to K4P2O7, and the pH in each of the aqueous electrolyte solutions are as shown in Table 4 below.

### 4.2 Electrochemical Measurement

The aqueous electrolyte solution according to each of Examples 54 to 65 was used, and an electrochemical cell was produced and subjected to evaluation by cyclic voltammetry and evaluation on a three-point scale of the following A, B and C in the same manner as in Comparative Examples 1 to 6. The results are shown in Table 4 below.

### 4.3 Low-Temperature Stability Evaluation

The presence or absence of freezing of the aqueous electrolyte solution according to each of Examples 54 to 65 was confirmed in the same manner as in Comparative Examples 1 to 6. The results are shown in Table 4 below.

### 4.4 Evaluation Results

### [Table 4]

**(Table 4)**

| | Additive material | Concentration of K₄P₂O₇ (mol/kg) | Additive material/K₄P₂O₇ (molar ratio) | pH | Evaluation of Al elution suppression | Presence or absence of freezing |
|---|---|---|---|---|---|---|
| Example 54 | H₃PO₄ | 4 | 0.0000025 | 11.0 | B | Absence |
| Example 55 | H₃PO₄ | 5 | 0.000002 | 11.2 | B | Absence |
| Example 56 | H₃PO₄ | 4 | 0.0000125 | 11.4 | B | Absence |
| Example 57 | H₃PO₄ | 5 | 0.00001 | 11.8 | B | Absence |
| Example 58 | H₃PO₄ | 4 | 0.000025 | 11.0 | B | Absence |
| Example 59 | H₃PO₄ | 5 | 0.00002 | 11.8 | B | Absence |
| Example 60 | H₃PO₄ | 4 | 0.000125 | 11.7 | B | Absence |
| Example 61 | H₃PO₄ | 5 | 0.0001 | 11.3 | B | Absence |
| Example 62 | H₃PO₄ | 4 | 0.00025 | 11.1 | B | Absence |
| Example 63 | H₃PO₄ | 5 | 0.0002 | 11.6 | B | Absence |
| Example 64 | H₃PO₄ | 4 | 0.00125 | 11.5 | B | Absence |
| Example 65 | H₃PO₄ | 5 | 0.001 | 11.3 | A | Absence |

As clear from the results shown in Tables 1 and 4, it can be seen that the effect of suppressing elution of Al is enhanced and stability of the current collector containing Al is improved by dissolving phosphoric acid together with potassium pyrophosphate in the aqueous electrolyte solution.

### 5. Examples 66 to 82

### 5.1 Fabrication of Aqueous Electrolyte Solution

Potassium pyrophosphate (K4P2O7) and pyrophosphoric acid (H4P2O7) as an additive material were dissolved in pure water at predetermined concentrations to obtain an aqueous electrolyte solution according to each of Examples 66 to 82. The concentration of K4P2O7, the molar ratio (additive material/K4P2O7) of the additive material to K4P2O7, and the pH in each of the aqueous electrolyte solutions are as shown in Table 5 below.

### 5.2 Electrochemical Measurement

The aqueous electrolyte solution according to each of Examples 66 to 82 was used, and an electrochemical cell was produced and subjected to evaluation by cyclic voltammetry and evaluation on a three-point scale of the following A, B and C in the same manner as in Comparative Examples 1 to 6. The results are shown in Table 5 below.

### 5.3 Low-Temperature Stability Evaluation

The presence or absence of freezing of the aqueous electrolyte solution according to each of Examples 66 to 82 was confirmed in the same manner as in Comparative Examples 1 to 6. The results are shown in Table 5 below.

### 5.4 Evaluation Results

### [Table 5]

**(Table 5)**

| | Additive material | Concentration of K₄P₂O₇ (mol/kg) | Additive material/K₄P₂O₇ (molar ratio) | pH | Evaluation of Al elution suppression | Presence or absence of freezing |
|---|---|---|---|---|---|---|
| Example 66 | H₄P₂O₇ | 3 | 0.033 | 9.5 | B | Presence |
| Example 67 | H₄P₂O₇ | 3 | 0.167 | 8.3 | B | Presence |
| Example 68 | H₄P₂O₇ | 3 | 0.333 | 7.4 | B | Presence |
| Example 69 | H₄P₂O₇ | 4 | 0.0000025 | 11.5 | B | Presence |
| Example 70 | H₄P₂O₇ | 4 | 0.0000125 | 11.5 | B | Presence |
| Example 71 | H₄P₂O₇ | 4 | 0.000025 | 11.2 | B | Presence |
| Example 72 | H₄P₂O₇ | 4 | 0.000125 | 11.1 | B | Presence |
| Example 73 | H₄P₂O₇ | 4 | 0.025 | 9.9 | A | Presence |
| Example 74 | H₄P₂O₇ | 4 | 0.125 | 8.9 | A | Presence |
| Example 75 | H₄P₂O₇ | 4 | 0.25 | 8.0 | A | Presence |
| Example 76 | H₄P₂O₇ | 5 | 0.000002 | 11.3 | B | Absence |
| Example 77 | H₄P₂O₇ | 5 | 0.00001 | 11.3 | B | Absence |
| Example 78 | H₄P₂O₇ | 5 | 0.00002 | 11.4 | B | Absence |
| Example 79 | H₄P₂O₇ | 5 | 0.0001 | 11.4 | B | Absence |
| Example 80 | H₄P₂O₇ | 5 | 0.02 | 10.4 | A | Absence |
| Example 81 | H₄P₂O₇ | 5 | 0.1 | 9.4 | A | Absence |
| Example 82 | H₄P₂O₇ | 5 | 0.2 | 8.7 | A | Presence |

As clear from the results shown in Tables 1 and 5, it can be seen that the effect of suppressing elution of Al is enhanced and stability of the current collector containing Al is improved by dissolving pyrophosphoric acid together with potassium pyrophosphate in the aqueous electrolyte solution.

### 5. Examples 83 to 91

### 5.1 Fabrication of Aqueous Electrolyte Solution

Potassium pyrophosphate (K4P2O7) and acetic acid (CH3COOH) as an additive material were dissolved in pure water at predetermined concentrations to obtain an aqueous electrolyte solution according to each of Examples 83 to 91. The concentration of K4P2O7, the molar ratio (additive material/K4P2O7) of the additive material to K4P2O7, and the pH in each of the aqueous electrolyte solutions are as shown in Table 6 below.

### 5.2 Electrochemical Measurement

The aqueous electrolyte solution according to each of Examples 83 to 91 was used, and an electrochemical cell was produced and subjected to evaluation by cyclic voltammetry and evaluation on a three-point scale of the following A, B and C in the same manner as in Comparative Examples 1 to 6. The results are shown in Table 6 below.

### 5.3 Low-Temperature Stability Evaluation

The presence or absence of freezing of the aqueous electrolyte solution according to each of Examples 83 to 91 was confirmed in the same manner as in Comparative Examples 1 to 6. The results are shown in Table 6 below.

### 5.4 Evaluation Results

### [Table 6]

**(Table 6)**

| | Additive material | Concentration of K₄P₂O₇ (mol/kg) | Additive material/K₄P₂O₇ (molar ratio) | pH | Evaluation of Al elution suppression | Presence or absence of freezing |
|---|---|---|---|---|---|---|
| Example 83 | CH₃COOH | 3 | 0.167 | 9.5 | A | Presence |
| Example 84 | CH₃COOH | 3 | 0.333 | 9.1 | A | Presence |
| Example 85 | CH₃COOH | 3 | 1 | 7.6 | A | Presence |
| Example 86 | CH₃COOH | 4 | 0.125 | 10.2 | A | Absence |
| Example 87 | CH₃COOH | 4 | 0.25 | 9.5 | A | Absence |
| Example 88 | CH₃COOH | 4 | 0.75 | 8.7 | A | Presence |
| Example 89 | CH₃COOH | 5 | 0.1 | 10.3 | A | Absence |
| Example 90 | CH₃COOH | 5 | 0.2 | 9.9 | A | Presence |
| Example 91 | CH₃COOH | 5 | 0.6 | 9.6 | A | Presence |

As clear from the results shown in Tables 1 and 6, it can be seen that the effect of suppressing elution of Al is enhanced and stability of the current collector containing Al is improved by dissolving acetic acid together with potassium pyrophosphate in the aqueous electrolyte solution.

### 5. Complement

All the aqueous electrolyte solutions of Examples 1 to 91 each had a high ion conductivity of more than 10 mS/cm. All the aqueous electrolyte solutions of Examples 1 to 91 each had a viscosity of 20 mPa·s or more and 400 mPa·s or less at 20°C. All the aqueous electrolyte solutions of Examples 1 to 91, when cooled from 0°C to -40°C, did not involve salt precipitation.

The above Examples have illustrated a case where potassium pyrophosphate was dissolved as the potassium polyphosphate in the aqueous electrolyte solution. However, the potassium polyphosphate dissolved in the aqueous electrolyte solution is not limited to potassium pyrophosphate. The present inventor has confirmed that even when potassium polyphosphate (for example, potassium tripolyphosphate) other than potassium pyrophosphate is dissolved instead of potassium pyrophosphate or together with potassium pyrophosphate in the aqueous electrolyte solution, the passivation effect of the Al foil surface is obtained and the same effect as described above is exerted.

The above Examples have illustrated a case where potassium hydrogen phosphate, phosphoric acid, pyrophosphoric acid or acetic acid was dissolved as the additive material in the aqueous electrolyte solution. However, the additive material dissolved in the aqueous electrolyte solution is not limited to potassium hydrogen phosphate, phosphoric acid, pyrophosphoric acid or acetic acid, and any additive material can be adopted as long as it can reduce the pH of the aqueous electrolyte solution and has no adverse effect on any electrochemical reaction. For example, even a case where polyphosphoric acid other than pyrophosphoric acid or carboxylic acid other than acetic acid is added in the aqueous electrolyte solution is also considered to achieve the above passivation effect of the Al foil surface by the same mechanism and exert the same effect as described above.

### 6. Conclusion

It can be said from the foregoing results that an aqueous battery including the following structures can inhibit Al from being eluted from a current collector containing Al to an aqueous electrolyte solution.
(1) The aqueous battery includes a positive electrode, an aqueous electrolyte solution and a negative electrode.
(2) One or both of the positive electrode and the negative electrode has/have a current collector containing Al.
(3) The current collector is in contact with the aqueous electrolyte solution.
(4) The aqueous electrolyte solution contains water, potassium polyphosphate dissolved in the water, and at least one of potassium hydrogen phosphate, phosphoric acid, polyphosphoric acid and carboxylic acid dissolved in the water.

### REFERENCE SIGNS LIST

10 positive electrode
   11 positive electrode active material layer
   12 positive electrode current collector
20 aqueous electrolyte solution
30 negative electrode
   31 negative electrode active material layer
   32 negative electrode current collector
40 separator
100 aqueous battery

## Claims

1. An aqueous battery comprising a positive electrode, an aqueous electrolyte solution and a negative electrode, wherein
one or both of the positive electrode and the negative electrode has/have a current collector containing Al,
the current collector is in contact with the aqueous electrolyte solution, and
the aqueous electrolyte solution contains
water,
potassium polyphosphate dissolved in the water, and
at least one of potassium hydrogen phosphate, phosphoric acid, polyphosphoric acid and carboxylic acid dissolved in the water.

2. The aqueous battery according to claim 1, wherein
the aqueous electrolyte solution contains the potassium polyphosphate dissolved at a concentration of 3 mol or more per 1 kg of the water.

3. The aqueous battery according to claim 1, wherein
the aqueous electrolyte solution contains the potassium polyphosphate dissolved at a concentration of 3 mol or more and 6 mol or less per 1 kg of the water.

4. The aqueous battery according to claim 1, wherein
the aqueous electrolyte solution contains the potassium polyphosphate dissolved at a concentration of 4 mol or more and 5 mol or less per 1 kg of the water.

5. The aqueous battery according to any one of claims 1 to 4, wherein
the aqueous electrolyte solution contains potassium dihydrogen phosphate dissolved in the water, and
a concentration of K in the aqueous electrolyte solution is 11.16 mol/L or more and 14.94 mol/L or less.

6. The aqueous battery according to any one of claims 1 to 5, wherein
the aqueous electrolyte solution has no freezing point at -40°C or higher.

7. The aqueous battery according to any one of claims 1 to 6, wherein
the aqueous electrolyte solution does not involve salt precipitation when cooled from 0°C to -40°C.

8. The aqueous battery according to any one of claims 1 to 7, wherein
the aqueous electrolyte solution has a viscosity of 20 mPa·s or more and 400 mPa·s or less at 20°C.

9. The aqueous battery according to any one of claims 1 to 8, wherein
a pH of the aqueous electrolyte solution is 3 or more and 12 or less.

10. The aqueous battery according to any one of claims 1 to 9, wherein
at least the positive electrode has the current collector.

11. The aqueous battery according to any one of claims 1 to 10, having a bipolar structure, wherein
a positive electrode active material layer is formed on one side of the current collector and a negative electrode active material layer is formed on the other side of the current collector.
